(19) **Europäisches Patentamt**

**European Patent Office**

**Office européen des brevets**

(11) **EP 1 090 672 A1**

(12) **EUROPEAN PATENT APPLICATION**

(43) Date of publication:
**11.04.2001 Bulletin 2001/15**

(51) Int. Cl.7: **B01D 53/22**, B01D 63/06,
B01D 71/02, B01J 19/24

(21) Application number: **00308620.4**

(22) Date of filing: **29.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **06.10.1999 JP 28597299**

(71) Applicant: **NGK INSULATORS, LTD.**
**Nagoya-City, Aichi Prefecture 467-8530 (JP)**

(72) Inventors:
• **Sakai, Hitoshi**
**Nagoya-city, Aichi-prefecture 467-8530 (JP)**
• **Takahashi, Tomonori**
**Nagoya-city, Aichi-prefecture 467-8530 (JP)**

(74) Representative:
**Paget, Hugh Charles Edward et al**
**MEWBURN ELLIS**
**York House**
**23 Kingsway**
**London WC2B 6HP (GB)**

(54) **Honeycomb type gas separating membrane structure**

(57) A honeycomb type gas separating membrane structure (1) is used for separating or supplying a specified gas from a mixed gas. The gas separating membrane structure (1) has a honeycomb unitary structure and is a dense body comprising an oxide having a brownmillerite structure. The honeycomb type gas separating membrane structure does not require a support for supporting a gas separating membrane, can provide a large membrane area, and can reduce costs because its production process is simple.

FIG.1(a)

EP 1 090 672 A1

**Description**

Background of the Invention and Related Art Statement

The present invention relates to a honeycomb type gas separating membrane structure for separating or supplying a specified gas from a mixed gas. Particularly, the present invention relates to a honeycomb type gas separating membrane structure having a honeycomb unitary structure.

There has conventionally been known a method using a gas separating membrane as a method for separating or supplying a specified gas from a mixed gas.

Generally, a gas separating membrane selectively separates ions or atoms diffused in a gas separating membrane. It has been known that gas permeability is inversely proportional to the thickness of the membrane.

Therefore, it is preferable to reduce the thickness of the membrane as much as possible to increase gas permeability of the gas separating membrane.

However, when the gas separating membrane is thinner than a certain degree, mechanical strength becomes weak, and the gas separating membrane cannot stand by itself. Therefore, it is generally performed that a gas separating membrane is formed on an inorganic porous support of porous glass, porous ceramics, porous aluminum oxide, or the like (e.g., Japanese Patent Publication 53-43153).

It is also preferable to enlarge an area per unit volume of the gas separating membrane to produce a compact and inexpensive gas separating membrane module.

To realize this, Japanese Patent Laid-Open No. 8-40703 discloses a method for forming a gas separating membrane on a predetermined surface of a porous substrate having a shape of a monolith having throughholes, Japanese Patent Laid-Open No. 9-255306 discloses a method for forming a gas separating membrane on a metallic porous support in which a metallic reinforcing plate having a plurality of gas flow holes, and U.S. Patent No. 5356728 discloses a gas separating membrane which is made of a material having a gas separation ability and which has a plurality of parallel throughholes running in vertical direction so as to mutually cross each other.

Further, Japanese Patent Publication 7-67528 discloses a honeycomb porous body in a ceramic membrane structure for condensing and separating condensable gas components. It is stated that a ceramic thin membrane having numerous continuous fine pores for condensing condensable gas components are loaded on inner surfaces of partition walls and it is preferable that the fine pores have an average pore diameter of 100Å or less and that the membrane has a thickness of 5 - 100 μm. It is also disclosed that a porous partition wall which becomes a support for imparting strength preferably has an average pore diameter of 0.2 - 5 μm and a thickness of about 0.5 - 3 mm.

However, in the case that a gas separation membrane is formed on a predetermined surface of a porous substrate (Japanese Patent Laid-Open No. 8-40703), it is very difficult to form a dense gas separating membrane on a porous substrate because of the difference in properties (e.g., thermal expansion coefficient) between a porous substrate and a gas separation membrane.

Another problem is that, in the case of a gas separating membrane having a layered structure (Japanese Patent Laid-Open No. 9-255306 and U.S. Patent No. 5356728), a production process becomes complex and the cost is increased though the membrane area can be enlarged.

Further, Japanese Patent Publication 7-67528 discloses that it is not considered that forming a membrane after molding a honeycomb body is necessary and a partition wall of a substrate is particularly thinned to 0.5 - 3 mm.

Summary of the Invention

The present invention has been made in view of such conditions and aims to provide a gas separating membrane structure which does not require a support for supporting a gas separating membrane, which can increase the membrane area, which is simple to produce, and which can reduce costs.

According to the present invention, there is provided a honeycomb type gas separating membrane structure for separating or supplying a specified gas from a mixed gas, wherein the gas separating membrane structure has a honeycomb unitary structure and is a dense body comprising an oxide having a brownmillerite structure.

It is preferable that a cell partition wall of the honeycomb type gas separating membrane structure has a thickness of 50 - 500 μm.

It is possible that respective gas flow passages on the raw material gas side and the permeated gas side are disposed so that they mutually cross each other at predetermined intervals. Alternatively the gas flow passage or passages on the raw material gas side and the gas flow passage or passages on the permeated gas side are disposed so that they are parallel and the respective gas flows are in opposite directions through the honeycomb structure. Brief Description of the Drawings

     Figs. 1(a), 1(b) show an embodiment of a honeycomb type gas separating membrane structure of the present invention. Fig. 1(a) is a schematic perspective view, and Fig. 1(b) is a sectional view along the line A-A of Fig. 1(a).
     Fig. 2 is an explanatory view about a model of a beam structure supported at both ends of a honeycomb type gas separating membrane structure of the present invention.

Figs. 3(a), 3(b) are schematic front views showing each embodiment of disposition of gas flow passages in a honeycomb type gas separating membrane structure of the present invention.

Figs. 4(a), 4(b) are schematic front views showing each embodiment of shapes of a honeycomb type gas separating membrane structure of the present invention. Fig. 4(a) is the case of a square, and Fig. 4(b) is the case of a circle.

Figs. 5(a), 5(b), and 5(c) are explanatory views showing an embodiment of a production process of a honeycomb type gas separating membrane structure of the present invention.

Fig. 6 is a schematic block diagram showing an embodiment of an apparatus for performance evaluation test of a honeycomb type gas separating membrane structure used in Example.

Detailed Description of the Invention

A honeycomb type gas separating membrane structure of the present invention has a honeycomb unitary structure and is a dense body comprising an oxide having a brownmillerite structure.

By a dense body here is meant a body which does not contain through-pores for gas passage. The component being separated from the mixed gas passes through the solid material of the dense body; for example oxygen may pass through a suitable material by incorporation as oxygen ions in oxygen vacancies in the crystalline structure of the membrane.

Brownmillerite is a known mineral structure. It may be said to be an oxygen-deficient perovskite structure.

By this, a support for supporting a gas separating membrane is unnecessary, and the membrane area can be enlarged, and cost is reduced because the production process is simple.

In the case that a honeycomb type gas separating membrane structure of the present invention is used as an oxygen permeable membrane, it causes partial oxidizing reaction by supplying oxygen through an oxygen permeable membrane using a hydrocarbon gas such as methane and can be adopted for production or the like of a synthetic gas comprising carbon monoxide and hydrogen.

The present invention is hereinbelow described in detail on the basis of drawings.

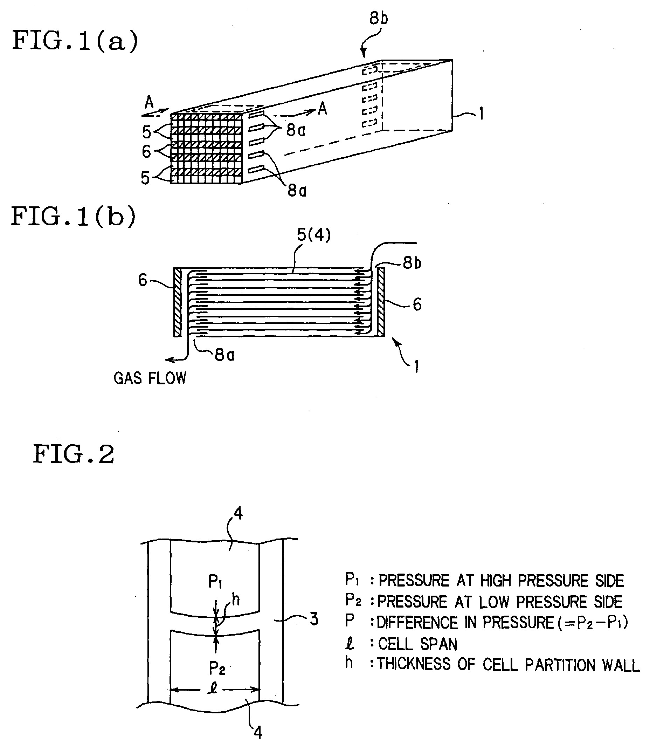

Figs. 1(a), 1(b) show an embodiment of a honeycomb type gas separating membrane structure of the present invention. Fig. 1(a) is a schematic perspective view, and Fig. 1(b) is a sectional view along the line A-A of Fig. 1(a).

An embodiment of a honeycomb separator membrane structure of the present invention is a square-section honeycomb type gas separating membrane structure 1 having a plurality of parallel cell passages 4 for gas flow as shown in Fig. 1. The flow passages are in two sets, i.e. gas flow passages of a raw material gas side and gas flow passages of a permeated gas side. The cell passages of the two sets are disposed so that the respective gas flows are parallel and in mutually opposite directions.

In one of the sets of gas flow passages, the cell passages 4 are sealed with a sealing material 6 at both ends thereof. Slits 8a and 8b are formed on the side face of the honeycomb type gas separating membrane structure 1 corresponding to the sealed cell passge 4 so as to pass through the side face of the cell passage 4 as shown in Fig. 1(b). The gas flow passages 5 of the other set are open at the opposite ends for straight flow through in the longitudinal direction of the honeycomb body.

By this, a gas on the raw material gas side or the permeated gas side can stay for a sufficient time in the gas flow passage, and therefore a gas contact efficiency on the raw material gas side and the permeated gas side can be improved.

The main characteristic of a honeycomb type gas separating membrane structure of the present invention is that a gas separating membrane itself is formed to have a dense honeycomb structure.

This enables the gas separating membrane itself to support its own weight, thereby a support for supporting the gas separating membrane is unnecessary. Therefore, the production process can be simplified and the cost can be reduced in comparison with a conventional gas separating membrane having a layered structure.

Further, a thickness of a cell partition wall and a cell span of the above honeycomb structure can be easily optimized in accordance with a difference in pressure between the raw material gas side and the permeated gas side.

In a honeycomb type gas separating membrane structure of the present invention, a cell partition wall between the raw material gas side and the permeated gas side preferable has a thickness of 50 - 500 μm.

In more detail, in the case that there is almost no difference in pressure between the raw material gas side and the permeated gas side, a thickness of a cell partition wall and a cell pitch can be freely selected.

For example, the cell partition wall may be thinned to about 50 μm which does not give any pinhole.

On the other hand, when there is a difference in pressure between the raw material gas side and the permeated gas side, it is necessary to select a thickness of the cell partition wall and a cell pitch according to the difference in pressure.

For example, in the case of a model having a beam structure supported at both ends as shown in Fig. 2, a necessary strength of a material to apply difference P in pressure to the thickness h of the cell partition wall and the cell span 1 can be calculated by the use of the formula: $\sigma = P/2(1/h)^2$

In the case that the difference in pressure between the raw material gas side and the permeated gas side is 50 atm. and that the material strength is 100 MPa, it is required that the cell pitch is 1.3 mm or less to obtain a cell partition wall having a thickness of 200 μm and that the cell pitch is 4 mm or less to obtain a cell partition wall having a thickness of 500 μm according to the above formula.

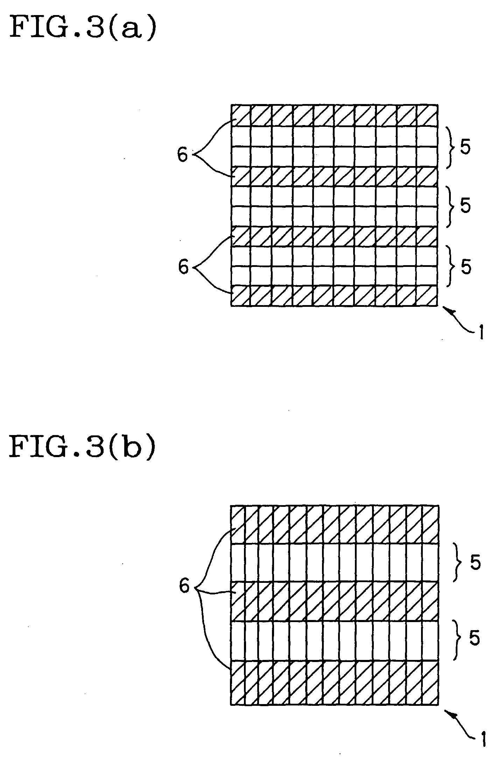

In a honeycomb type gas separating membrane structure of the present invention, it is not required that a sectional area of a gas flow passage on the raw material gas side is the same as that on the permeated gas side, and the sectional areas can be freely adjusted in consideration of reaction speed, flow rate, and the case of having a difference in pressure between the raw material gas side and the permeated gas side (see Figs. 3(a), 3(b)).

For example, in the case that there is a difference in pressure between the raw material gas side and the permeated gas side, as shown in Fig. 3(b), a cell span can be widened with regard to partition walls which are not positioned between the raw material gas side and the permeated gas side.

It is not required to give all the partition walls the same thickness. The partition walls between the raw material gas side and the permeated gas side are required to be as thin as possible, and the other walls can be suitably thickened without problem in view of strength upon production.

Further, it is also possible to form a catalyst layer on each of the raw material gas side and the permeated gas side of the honeycomb type gas separating membrane structure by applying a mixture of catalytic powder and alcohol on a honeycomb fired body, and then subjecting the honeycomb fired body to a heat treatment at high temperatures. The catalytic layer can be easily formed because the catalytic layer does not require gastightness unlike formation of a functional membrane.

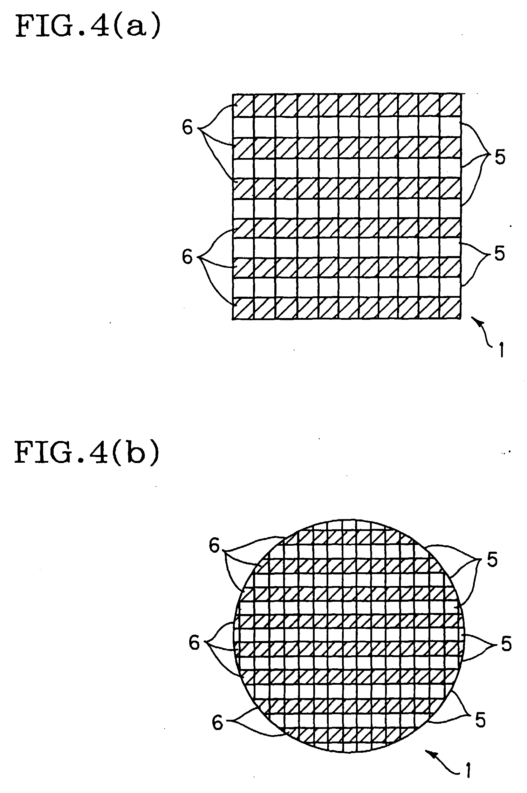

Further, a shape of a honeycomb type gas separating membrane structure of the present invention is preferably square or circular as shown in Figs. 4(a) and 4(b).

In the case that the shape is square (see Fig. 4 (a)), the surface area can be effectively used, and filling density can be increased in the case that a plurality of membrane structures constitute a module.

On the other hand, in the case that the shape is circular (see Fig. 4(b)), sealing is easy, the structure is strong against external impact.

The cell shape of a honeycomb type gas separating membrane structure of the present invention is not particularly limited, and for example, circular, square, or hexagonal shape, or a mixture of these shapes may be suitably employed. In the case that permeation area on the raw material gas side and the permeated gas side are made large, it is preferable to employ square mainly.

Though an oxide having a brownmillerite structure used in the present invention is not particularly limited, there is preferably used, for example, a compound represented by a general formula, $A_2B_2O_5$, and used for a mixed conductive oxygen permeable membrane having both electronic conductivity and oxygen ion conductivity as disclosed in WO 97/41060.

A preferred formula of the above compound is represented by $A_{2-x}A'_xB_{2-y}B'_yO_{5+z}$ (0<x<2, 0<y<2, 0<z<1). A is an alkaline earth metal, A' is a lanthanoid element or Y, B is a 3d transition element (a transition metal with 3d valency electrons, i.e. of atomic number 21 to 30) or a 13 group metal (metal of Group 13 of the new form Periodic Table), and B' is a 3d transition element, a 13 group metal, a lanthanoid element, or Y.

The best composition of the above compound is $Sr_{2-x}La_xGa_{2-y}FeyO_{5+z}$(0.2<x<0.8, 1.0<y<1.8, 0<z<0.3). It has been confirmed that if this compound is employed, a membrane composition is not changed for 1,000 hours even if the compound is exposed to both atmospheres of air on one side and methane on the other side at 900°C.

The present invention is hereinbelow described in more detail with reference to Example. However, the present invention is by no means limited to these Examples.

( Example )

$SrCO_3$, $La_2O_3$, $Ga_2O_3$, $Fe_2O_3$ powders were mixed for 3 hours in a ball mill with an IPA solvent and a $ZrO_2$ ball to give a mixed powder having a cation molar ratio of 1.7:0.3:0.4:1.6. The obtained powder was put on an alumina substrate and fired in the atmosphere for 12 hours at 145°C to give a calcined powder. It was confirmed that the calcined powder had a brownmillerite structure by an X-ray diffraction method.

The aforementioned calcined powder was ground with an attritor and a $ZrO_2$ ball and subjected to sieving to obtain a powder having average particle size of about 0.7 μm. To the calcined powder were added 5% by weight of methyl cellulose (binder) and 30% by weight of water in reference to weight of the solid content of the calcined powder to obtain a mixture.

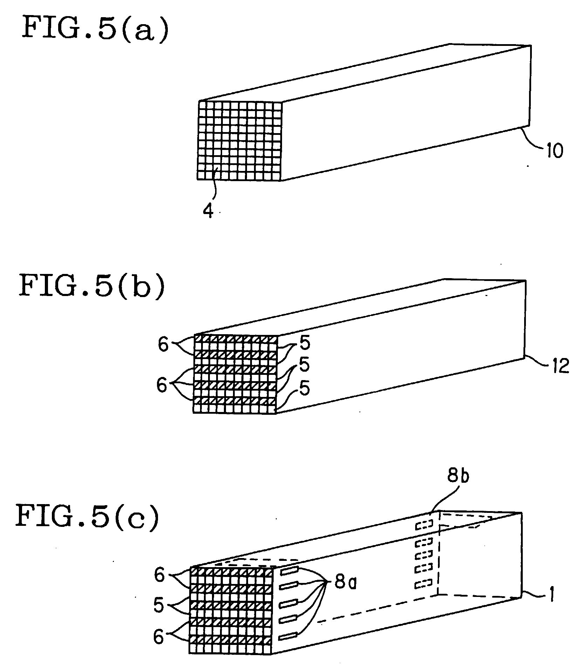

The mixture was subjected to kneading and then extrusion molding to obtain a honeycomb compact 10 having dimensions of 35 mm diameter × 10 cmL (see Fig. 5(a)). A sealing material 6 having the same components as the calcined powder was applied to both end surfaces of the honeycomb compact by brushing on every other line for sealing. Only a peripheral wall had a thickness of 1 mm.

Then, the honeycomb compact was fired for 5 hours at 1350°C in the atmosphere to obtain a honeycomb fired body 12(Fig. 5(b)).

In the obtained honeycomb fired body 12, an apparent density was 95%, a thickness of a cell partition wall was 200 μm, a cell span was 3 mm, and the number of cells was 10 cell × 10 cell.

Finally, slits 8a, 8b were formed by cutting so as to pass through the side surface of the cell passage 4 on a side surface of the honeycomb fired body 12 corresponding to the sealed cell passage 4 as shown in Fig. 1(b) to obtain a honeycomb type gas separating membrane structure 1 shown in Fig. 5(c).

To 100ml of $Ni(NO_3)_2$ was added 100g of $Sr_{0.2}La_{0.8}MnO_3$ to obtain a mixture. The mixture was applied to the honeycomb type gas separating membrane structure on the permeated gas side, dried for 12 hours at 90°C, and then fired for 6 hours at 600°C in an atmosphere of 10% of hydrogen - 90% of Ar.

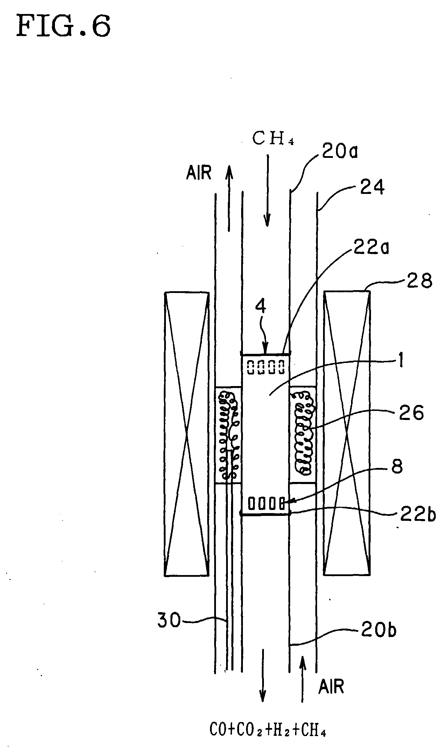

Then, a performance evaluation test of the honeycomb type gas separating membrane structure was performed using an apparatus shown in Fig. 6.

A vitreous powder was applied in peripheral portions of the upper and lower ends of the honeycomb type gas separating membrane structure 1, which was then brought into contact with square-shaped alumina tubes 20a and 20b and pressed by the mechanical force of a spring. In such a condition, the honeycomb type gas separating membrane structure 1 was perpendicularly disposed inside a quartz tube 24 in an electric furnace 28.

The gap between the honeycomb type gas separating membrane structure 1 and the quartz tube 24 was filled with a quartz wool 26.

They were arranged so that air in the quartz tube 24 flows mainly into the honeycomb type gas separating membrane structure 1.

The vitreous powder was molten at a high temperature to work as glass seals 22a and 22b to seal the upper and lower ends of the honeycomb type gas separating membrane structure 1 and the alumina tubes 20a and 20b.

Next, as shown in Fig. 6, $CH_4$ gas was introduced from upside to downside of the honeycomb type gas separating membrane structure 1 on the side of cell passage 4 (the side of permeated gas) at a rate of 20 Nl/min. With circulating air from the bottom to the top of the side of the slit 8 (raw material gas side) disposed on the side surface of the honeycomb type gas separating membrane structure 1, the honeycomb type gas separating membrane structure 1 was measured for volume of CO, $CO_2$, $H_2$, $CH_4$ and leakage of air at the time that the electric furnace 28 was heated up to 900°C at the rate of 10°C/min by gas chromatography.

As a result, the total volume of CO + $H_2$ (synthesis gas volume) was 5Nml/min • $cm^2$.

With regard to the leakage of air of the honeycomb type gas separating membrane structure, nitrogen concentration was 0.01% or less, and no leakage of air was confirmed.

In a honeycomb type gas separating membrane structure of the present invention, a support for supporting a gas separating membrane is unnecessary, and the membrane area can be enlarged, and cost is reduced because the production process is simple.

## Claims

1. A honeycomb type gas separating membrane structure for separating or supplying a specified gas from a mixed gas, wherein the gas separating membrane structure has a honeycomb unitary structure and is a dense body comprising an oxide having a brownmillerite structure.

2. A honeycomb type gas separating membrane structure according to claim 1, wherein a cell partition wall between a raw material gas side and a permeated gas side of the honeycomb type gas separating membrane structure has a thickness of 50 - 500μm.

3. A honeycomb type gas separating membrane structure according to claim 1 or 2, wherein the gas flow passage or passages on the raw material gas side and the gas flow passage or passages on the permeated gas side are disposed so that they are parallel and the respective gas flows are in opposite directions through the honeycomb structure.

4. A method of separating or supplying a specified gas from a gas mixture, comprising passing the specified gas through a membrane which has a honeycomb unitary structure and is a dense body comprising an oxide having a brownmillerite structure.

FIG.1(a)

FIG.1(b)

GAS FLOW

FIG.2

$P_1$ : PRESSURE AT HIGH PRESSURE SIDE
$P_2$ : PRESSURE AT LOW PRESSURE SIDE
$P$ : DIFFERENCE IN PRESSURE $(=P_2-P_1)$
$\ell$ : CELL SPAN
$h$ : THICKNESS OF CELL PARTITION WALL

6

FIG.3(a)

FIG.3(b)

## FIG.4(a)

## FIG.4(b)

FIG.5(a)

10

4

FIG.5(b)

6
6
5
5
5
12

FIG.5(c)

8b
6
5
6
8a
1

# FIG.6

CH$_4$

AIR

20a

24

22a

28

4

1

26

8

22b

30

20b

AIR

CO+CO$_2$+H$_2$+CH$_4$

## EUROPEAN SEARCH REPORT

European Patent Office

Application Number

EP 00 30 8620

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 41060 A (ELTRON RESEARCH INC) 6 November 1997 (1997-11-06) * claim 34; figure 1 * | 1,4 | B01D53/22 B01D63/06 B01D71/02 B01J19/24 |
| Y | US 5 034 023 A (THOMPSON DAVID F) 23 July 1991 (1991-07-23) * column 2, line 13 - column 3, line 4 * | 1-4 | |
| Y | US 5 723 035 A (CABLE THOMAS L ET AL) 3 March 1998 (1998-03-03) * claims 1,3 * | 1-4 | |

TECHNICAL FIELDS SEARCHED (Int.Cl.7)

B01D
B01J

The present search report has been drawn up for all claims

| Place of search | Date of completion of the search | Examiner |
|---|---|---|
| THE HAGUE | 7 December 2000 | Faria, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**          EP 00 30 8620

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2000

| Patent document cited in search report | | Publication date | Patent family member(s) | | Publication date |
|---|---|---|---|---|---|
| WO 9741060 | A | 06-11-1997 | US | 6033632 A | 07-03-2000 |
|  |  |  | AU | 6979196 A | 19-11-1997 |
|  |  |  | CA | 2252539 A | 06-11-1997 |
|  |  |  | EP | 0896566 A | 17-02-1999 |
| US 5034023 | A | 23-07-1991 | NONE | | |
| US 5723035 | A | 03-03-1998 | EP | 0908227 A | 14-04-1999 |
|  |  |  | US | 5591315 A | 07-01-1997 |
|  |  |  | US | 5306411 A | 26-04-1994 |
|  |  |  | US | 4933054 A | 12-06-1990 |
|  |  |  | AU | 706663 B | 17-06-1999 |
|  |  |  | AU | 3045295 A | 04-04-1996 |
|  |  |  | BR | 9504113 A | 01-04-1997 |
|  |  |  | CA | 2158607 A | 24-03-1996 |
|  |  |  | CN | 1127235 A | 24-07-1996 |
|  |  |  | DE | 69515586 D | 20-04-2000 |
|  |  |  | EP | 0705790 A | 10-04-1996 |
|  |  |  | ES | 2145224 T | 01-07-2000 |
|  |  |  | JP | 8173776 A | 09-07-1996 |
|  |  |  | PL | 310614 A | 01-04-1996 |
|  |  |  | US | 5714091 A | 03-02-1998 |
|  |  |  | US | 5788748 A | 04-08-1998 |
|  |  |  | US | 5648304 A | 15-07-1997 |
|  |  |  | US | 5702999 A | 30-12-1997 |
|  |  |  | US | 5744015 A | 28-04-1998 |
|  |  |  | US | 6019885 A | 01-02-2000 |
|  |  |  | US | 5693212 A | 02-12-1997 |
|  |  |  | AT | 152859 T | 15-05-1997 |
|  |  |  | AU | 6838290 A | 04-07-1991 |
|  |  |  | CA | 2032994 A | 28-06-1991 |
|  |  |  | CN | 1055205 A,B | 09-10-1991 |
|  |  |  | CN | 1221812 A,B | 07-07-1999 |
|  |  |  | CN | 1227976 A | 08-09-1999 |
|  |  |  | CN | 1227977 A | 08-09-1999 |
|  |  |  | DE | 69030651 D | 12-06-1997 |
|  |  |  | DE | 69030651 T | 21-08-1997 |
|  |  |  | EP | 0438902 A | 31-07-1991 |
|  |  |  | EP | 0766330 A | 02-04-1997 |
|  |  |  | ES | 2100877 T | 01-07-1997 |
|  |  |  | JP | 6056428 A | 01-03-1994 |
|  |  |  | NO | 905556 A | 28-06-1991 |
|  |  |  | NZ | 236632 A | 26-07-1994 |
|  |  |  | NZ | 233786 A | 26-10-1993 |
|  |  |  | ZA | 9010408 A | 30-10-1991 |
|  |  |  | GB | 2203446 A,B | 19-10-1988 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 00 30 8620

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2000

| Patent document cited in search report | Publication date | Patent family member(s) | | Publication date |
|---|---|---|---|---|
| US 5723035        A | | AT | 137421 T | 15-05-1996 |
| | | AU | 5596290 A | 29-11-1990 |
| | | CA | 2017243 A | 25-11-1990 |
| | | CN | 1048169 A,B | 02-01-1991 |
| | | DE | 69026752 D | 05-06-1996 |
| | | EP | 0399833 A | 28-11-1990 |
| | | EP | 0673675 A | 27-09-1995 |
| | | JP | 3101833 A | 26-04-1991 |
| | | NO | 304808 B | 15-02-1999 |
| | | ZA | 9003994 A | 29-01-1992 |

For more details about this annex : see Official Journal of the European Patent Office, No. 12/82